# FASCICULE DE BREVET EUROPEEN

(11) **EP 3 204 662 B1**
(45) Date de publication et mention de la délivrance du brevet: **31.10.2018**
(21) Numéro de dépôt: 15770571.6
(22) Date de dépôt: 10.09.2015
(51) Int. Cl.: B60G 13/00, F16F 9/32, F16F 9/38

(54) **SYSTÈME DE PROTECTION POUR AMORTISSEUR HYDRAULIQUE COMPORTANT DES DÉCOUPES POUR UNE SANGLE DE COMPRESSION**
SCHUTZSYSTEM FÜR HYDRAULISCHEN STOSSDÄMPFER MIT AUSSPARUNGEN FÜR EIN KOMPRESSIONSBAND
PROTECTION SYSTEM FOR HYDRAULIC SHOCK ABSORBER COMPRISING CUTOUTS FOR A COMPRESSION STRAP

(30) Priorité: 09.10.2014 FR 1459692
(43) Date de publication de la demande: 16.08.2017
(73) Titulaire: PSA Automobiles SA, 78300 Poissy (FR)
(72) Inventeur: MULLER, Jerome, F-25600 Nommay (FR); LE COSQUER, Yannick, F-25350 Mandeure (FR); JEANNEAU, Yann, F-35850 Geveze (FR); SIGOGNAULT, André-Louis, F-35830 Betton (FR)
(74) Mandataire: Rosenberg, Muriel Sylvie
(86) Numéro de dépôt international: PCT/FR2015/052417
(87) Numéro de publication internationale: WO 2016/055706

(56) Documents cités:
- EP-A1- 1 859 971
- EP-A1- 2 520 824
- EP-A2- 0 967 143
- WO-A1-2014/102861
- DE-A1- 19 615 559
- US-A- 5 171 036

## Description

La présente invention concerne un système de protection pour un amortisseur de suspension de véhicule automobile, ainsi qu'un procédé d'assemblage d'un véhicule automobile avec ces systèmes de protection, et un véhicule automobile équipé de ces systèmes de protection.

Les véhicules automobiles comportent généralement des suspensions reliant des bras de suspension à la caisse du véhicule, comprenant pour chaque roue un ressort supportant la charge du véhicule, et un amortisseur disposé en parallèle de ce ressort, qui freine les oscillations.

Un type d'amortisseur hydraulique connu comporte une tige disposée suivant l'axe d'un corps tubulaire, comprenant à une extrémité un piston coulissant dans ce corps afin de séparer deux chambres se trouvant de chaque côté. Le piston présente des passages de fluide d'une chambre à l'autre dans chacun des sens, effectuant un freinage de ce fluide pour réaliser l'amortissement de la suspension.

On assure ainsi en freinant les oscillations de la caisse du véhicule, à la fois le confort et la tenue de route de ce véhicule.

Sur certains véhicules, l'amortisseur est disposé sensiblement verticalement, l'extrémité inférieure étant fixée sur le bras de suspension, l'extrémité supérieure étant fixée à la caisse du véhicule.

Lors du montage du véhicule sur la chaîne d'assemblage du constructeur, un procédé d'assemblage connu comporte la préparation du train roulant recevant tous ses équipements, comprenant notamment les amortisseurs dressés vers le haut, qui reçoit ensuite la caisse du véhicule descendant dessus. De cette manière la partie supérieure des amortisseurs vient près des points de fixation de la caisse prévus pour les recevoir.

De plus il est connu lors de cet assemblage de disposer une sangle venant comprimer la tige de l'amortisseur pour la maintenir rétractée, afin de faciliter sa mise en position sur la caisse du véhicule.

La sangle de compression comporte alors une partie centrale en appui sur l'extrémité de la tige de l'amortisseur, est deux parties latérales qui descendent de manière diamétralement opposée le long du corps de l'amortisseur pour être fixées dessus, afin d'empêcher la sortie de cette tige.

Par ailleurs un type de protection connu, présenté notamment par le document CN-U-201843929, comporte un soufflet réalisé en élastomère prévu pour couvrir la tige de l'amortisseur quand elle sort du corps, comprenant deux extrémités qui enserrent ce corps ainsi que la tige, reliées entre elles par le soufflet. Le soufflet comporte de plus deux perçages permettant d'équilibrer la pression intérieure, suivant le débattement de l'amortisseur.

Le document WO 2014/102861 A1 est considéré comme étant l'état de la technique le plus proche de l'objet de l'invention et divulgue les caractéristiques du préambule des revendications indépendantes 1 et 7.

En variante, certains véhicules comportent un soufflet de protection comprenant une extrémité supérieure liée à la tige de l'amortisseur, et une extrémité inférieure fixée à l'élément de suspension relié au corps de cet amortisseur. De cette manière on peut fermer entièrement un creux comme un puits formé sur cet élément de suspension, et recevant la base de l'amortisseur, ce qui évite la projection de cailloux dans ce creux.

On a alors dans ce cas un problème de passage de la sangle autour de l'amortisseur, qui est gênée par le soufflet s'il est mis en place au préalable sur le train roulant du véhicule, avant la descente de la caisse sur ce train.

De plus on recherche un système de protection qui peut s'adapter de manière simple et rapide sur des véhicules existants, sans effectuer de modification sur ces véhicules.

La présente invention a notamment pour but d'éviter ces inconvénients de la technique antérieure.

Elle propose à cet effet un système de protection pour un amortisseur hydraulique reliant un élément de suspension à la caisse d'un véhicule automobile, comprenant une tige coulissant dans un tube, ce système de protection comportant un soufflet présentant une extrémité prévue pour être reliée à la tige de l'amortisseur, caractérisé en ce que cette extrémité de soufflet comporte des découpes permettant le passage d'une sangle de compression maintenant la tige comprimée.

Un avantage de ce système de protection est que de manière simple et économique, notamment par une forme dans le moulage de l'élastomère du soufflet donnant directement les deux découpes, on permet le passage de la sangle de compression disposée le long du corps de l'amortisseur à l'intérieur du soufflet, la partie centrale de cette sangle sortant du soufflet pour venir comprimer la tige en passant au-dessus de son extrémité.

On peut ainsi ajouter le système de protection sur l'amortisseur venant par dessus, sans modifier le procédé d'assemblage du véhicule.

Le système de protection selon l'invention peut de plus comporter une ou plusieurs des caractéristiques suivantes, qui peuvent être combinées entre elles.

Avantageusement, le système de protection comporte deux découpes diamétralement opposées, permettant le passage de la sangle de compression comprenant deux côtés disposés le long du tube, et entre ces côtés une partie centrale passant au-dessus de l'extrémité de la tige pour la maintenir comprimée.

En particulier, l'extrémité du soufflet peut comporter un creux circulaire intérieur prévu pour venir sur un bourrelet extérieur lié à la tige de l'amortisseur.

Dans ce cas, les découpes sont avantageusement formées sur la face supérieure du creux circulaire.

Avantageusement, le soufflet comporte à côté des découpes un contour continu, de manière à enserrer de manière continue avec une étanchéité le bourrelet de l'anneau supérieur après le retrait de la sangle de compression.

Avantageusement, le soufflet est formé avec ses découpes par le moulage d'un élastomère ou le soufflage d'une matière plastique.

L'invention a aussi pour objet un procédé d'assemblage d'un véhicule automobile présentant des amortisseurs équipés de systèmes de protection comprenant l'une quelconque des caractéristiques précédentes, comportant les étapes suivantes, on prépare un train roulant comportant les amortisseurs comprimés par des sangles de compression, on descend ensuite le système de protection sur ces amortisseurs en ajustant les sangles dans les découpes, et on dépose enfin la caisse du véhicule sur ce train roulant.

Avantageusement, on retire les sangles de compression après la dépose de la caisse du véhicule, en les faisant coulisser dans les découpes.

L'invention a aussi pour objet un véhicule automobile comprenant des amortisseurs hydrauliques de suspension équipés de systèmes de protection, qui comportent l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue en coupe transversale par rapport à l'axe longitudinal du véhicule, d'un amortisseur dans une position comprimée, fixé sur un bras de suspension arrière de ce véhicule ;
- la figure 2 est une vue en coupe longitudinale de cet amortisseur dans une position étirée ;
- la figure 3 est une vue d'un système de protection prévu pour cet amortisseur ;
- la figure 4 est une vue présentant le montage de la sangle de compression sur l'amortisseur sans le système de protection ; et
- les figures 5 et 6 présentent cet amortisseur équipé d'un système de protection selon l'invention, recevant la sangle de compression.

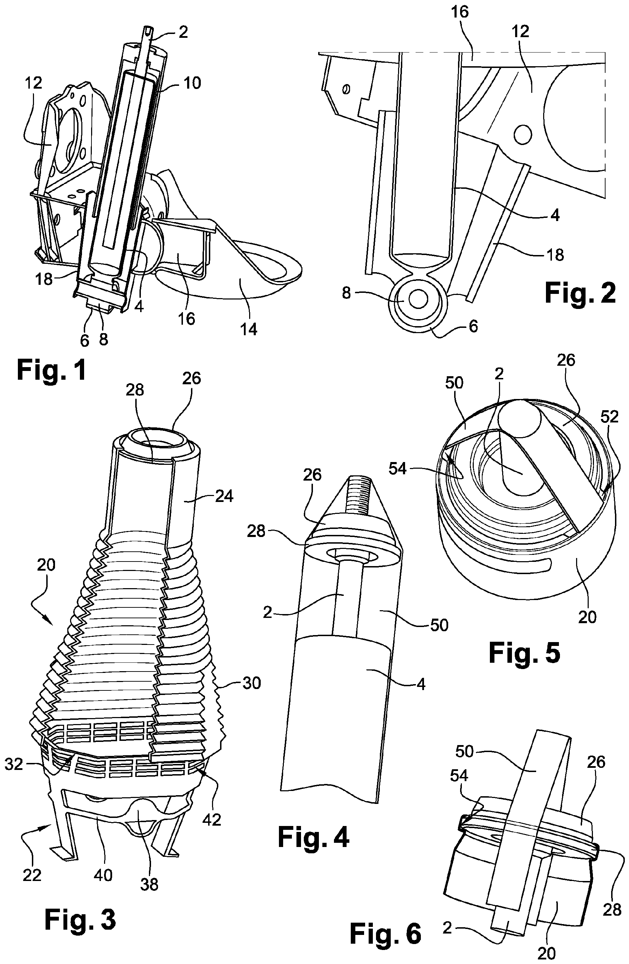

Les figures 1 et 2 présentent un amortisseur comportant une tige 2 disposant à son extrémité inférieure d'un piston non représenté, coulissant dans un tube fermé contenant le fluide 4.

L'extrémité supérieure de la tige 2 est fixée à la caisse du véhicule, l'extrémité inférieure du tube fermé 4 comporte un anneau disposé suivant un axe transversal 6, contenant à l'intérieur par un élastomère de filtration, un tube horizontal de fixation 8 recevant une vis traversant un puits 18.

Le tube fermé 4 est entouré par un tube de protection extérieur 10 dont la partie supérieure est fixée en haut de la tige 2, afin de former une protection de la partie de cette tige sortant au-dessus du tube fermé quand l'amortisseur est en extension.

La suspension arrière du véhicule comporte un bras de suspension 16 présentant dans sa partie arrière un flasque latéral 12 tourné vers l'extérieur du véhicule, recevant le porte moyeu de la roue arrière, et une coupelle horizontale 14 recevant l'appui de la base du ressort de suspension.

En avant de ces éléments, le bras de suspension 16 comporte le puits 18 sensiblement vertical entouré par une tôle, comprenant dans la direction transversale deux faces sensiblement parallèles comportant à leurs bases le perçage recevant la vis du tube de fixation inférieur 8.

Dans la direction longitudinale, le puits 18 comporte deux faces formant un cône ouvert vers le haut, de manière à permettre un débattement de l'amortisseur autour de l'axe de son tube de fixation inférieur 8 quand la suspension arrière travaille.

On a alors lors du roulage du véhicule un risque de projection de cailloux par les roues qui peuvent rentrer dans le puits 18, et se trouver coincés à la base de ce puits qui est resserrée, en faisant du bruit et en endommageant des éléments. Ce problème peut conduire au blocage de l'amortisseur, et du débattement de la roue.

En particulier dans cet exemple, les cailloux comportant des dimensions inférieures à 5mm peuvent traverser le puits 18 en se glissant vers le bas entre l'anneau transversal 6 et la tôle de ce puits, pour tomber par terre, alors que les cailloux de dimension supérieure ne pouvant passer par cette sortie, restent retenus s'ils ne sont pas cassés en morceaux par les mouvements de l'amortisseur.

La figure 3 présente le système de protection pour un amortisseur ne comprenant pas de tube extérieur 10, comportant en partie supérieure un soufflet 20 réalisé par un soufflage de matière plastique ou un moulage d'élastomère, dont le sommet est fixé en haut de l'amortisseur, et la base est fixée au-dessus d'une embase 22 réalisée par un moulage de matière plastique, qui descend dans le puits 18 du bras de suspension 16 pour y être attachée.

Le soufflet 20 présente une partie supérieure cylindrique 24 ajustée autour de la tige seule, le tube de protection de l'amortisseur étant remplacé par le dispositif de protection. Le soufflet 20 se termine en haut par un creux circulaire intérieur qui est ajusté sur un bourrelet circulaire correspondant 28 d'un anneau de filtrage caoutchouc supérieur 26 lié à la tige de l'amortisseur, pour assurer par un serrage la fixation ainsi que l'étanchéité de l'ensemble.

La partie supérieure cylindrique 24 du soufflet 20 se prolonge vers le bas par une forme conique 30 de section ovale allongée suivant l'axe longitudinal du véhicule, se terminant à la base par une rainure annulaire intérieure, qui reçoit un rebord continu tourné vers l'extérieur 32 disposé en haut de l'embase 22, pour assurer de la même manière par un serrage la fixation.

L'embase 22 comporte une forme conique annulaire ouverte vers le haut, s'ajustant à l'intérieur de la tôle du puits 18.

Dans la direction longitudinale, l'embase 22 comporte deux bras inférieurs tournés vers le bas 34, qui se terminent chacun par un crochet tourné vers l'extérieur 36, afin d'assurer par clipsage un accrochage en dessous de la tôle du puits 18 quand cette embase est complètement descendue en s'ajustant dans le contour intérieur de ce puits.

L'embase 22 comporte en bas de sa forme annulaire, de chaque côté entre les deux bras inférieurs 34, et en haut de ces bras, une branche flexible horizontale 40 qui relie les deux bras entre eux.

De chaque côté au milieu de la branche unique 40, cette branche comporte une butée d'arrêt 38 dépassant vers l'extérieur, qui vient s'ajuster dans un perçage oblong à l'intérieur du puits 18 quand l'embase 22 est fixée sur le bras de suspension 16. La base de cette butée 38 vient en appui en bas de ce perçage.

Lors de la mise en place manuelle de l'embase 22 du système de protection dans le puits 18 du bras de suspension 16, l'opérateur descend cette embase avec une petite déformation élastique des branches 40 vers l'intérieur, jusqu'à ce que les butées d'arrêts 38 rentrent dans leurs perçages en se clipsant dedans. Ensuite avec l'appui de la base des butées 38 dans les perçages, on a une déformation élastique des branches 40 vers le haut jusqu'à ce que les crochets 36 des bras inférieurs 34 se clipsent en dessous du puits 18.

On obtient alors de manière simple et rapide un blocage de l'embase 22 par les crochets 36 ainsi que par les butées d'arrêt 38, avec un serrage indiqué par les flèches F qui est maintenu par la déformation élastique des branches horizontales 40, ce qui bloque cette embase en empêchant des petits mouvements qui pourraient causer des bruits et de l'usure.

On notera que la déformation élastique des branches 40 permet aussi de s'adapter aux écarts de tolérance sur la hauteur de la tôle du puits 18, ainsi qu'à la présence de bavures sur les découpes de cette tôle, ce qui assure de manière simple un blocage de l'embase 22 sans jeux pour une production en grande série.

La partie supérieure de l'embase 22 comporte trois rangées horizontales de perçages oblongs 42 orientés horizontalement, qui sont disposées entre la base du soufflet en élastomère 30, et le dessus de la tôle du puits 18.

Les perçages oblongs 42 comportent une hauteur inférieure à 5mm, et une largeur plus importante, de manière à permettre une ventilation du volume intérieur du soufflet 20 tout en interdisant l'entrée de cailloux dont la dimension est supérieure à ces 5mm.

La figure 4 présente la partie supérieure de l'amortisseur comprenant sa tige 2 qui est comprimée par une sangle 50, sa partie centrale venant en appui sur l'extrémité de cette tige, et ses deux parties latérales contournant d'abord l'anneau supérieur 26 lié à la tige 2 et son bourrelet circulaire 28, pour venir de manière opposée le long du tube fermé 4, et être fixées à ce tube, ou à l'élément de suspension lié à la partie inférieure de ce tube.

De cette manière suivant un procédé d'assemblage connu du véhicule, après avoir fixé l'amortisseur sur l'élément de suspension monté sur le train arrière, on maintient sa tige 2 comprimée ce qui permet de descendre facilement la caisse du véhicule sur ce train arrière, et ensuite en libérant la sangle 50 de laisser remonter cette tige pour venir fixer son extrémité supérieure sous la caisse du véhicule.

Les figures 5 et 6 présentent l'extrémité supérieure du soufflet 20 du système de protection de l'amortisseur, comprenant le creux circulaire intérieur 54 ajusté sur le bourrelet 28 de l'anneau supérieur 26.

La face supérieure horizontale du creux circulaire 54 du soufflet 20, comporte deux découpes diamétralement opposées 52 permettant chacune le passage d'une partie latérale de la sangle 50, qui part en diagonale vers le haut afin de rejoindre l'extrémité de la tige 2.

Avantageusement on réalise de manière économique lors du soufflage ou du moulage du soufflet 20 les deux découpes 52, qui permettent de descendre ce soufflet sur l'amortisseur après avoir comprimé sa tige 2 avec la sangle 50.

Après la pose de la caisse du véhicule sur le train arrière, quand la sangle est détachée pour libérer la tige 2 de l'amortisseur, on fait ensuite coulisser cette sangle le long du tube fermé 4 et dans les découpes 52 afin de la retirer, en laissant en place le soufflet 20.

Le contour circulaire du soufflet 20 reprend alors sa place après le retrait de la sangle 50, en enserrant en dessous des découpes 52, de manière continue le bourrelet 28 de l'anneau supérieur 26, ce qui assure en même temps son maintien et l'étanchéité sur cet anneau.

D'une manière générale, le système de protection selon l'invention se pose sur les véhicules en cours de montage sans outillage particulier, ni élément de fixation additionnel comme des vis ou des agrafes.

De plus ce système de protection ne nécessitant aucune modification du véhicule, peut s'adapter sur les nouvelles productions sans modification des études de ce véhicule. Il peut s'adapter sur les productions anciennes par des interventions du service après-vente sans modification ni échange de pièce, avec seulement un démontage de la fixation supérieure de l'amortisseur.

## Revendications

1. Système de protection pour un amortisseur hydraulique reliant un élément de suspension (16) à la caisse d'un véhicule automobile, comprenant une tige (2) coulissant dans un tube (4), ce système de protection comportant un soufflet (20) présentant une extrémité (54) prévue pour être reliée à la tige de l'amortisseur (2), **caractérisé en ce que** cette extrémité de soufflet (54) comporte des découpes (52) permettant le passage d'une sangle de compression (50) maintenant la tige (2) comprimée.

2. Système de protection selon la revendication 1, **caractérisé en ce qu'**il comporte deux découpes diamétralement opposées (52), permettant le passage de la sangle de compression (50) comprenant deux côtés disposés le long du tube (4), et entre ces côtés une partie centrale passant au-dessus de l'extrémité de la tige (2) pour la maintenir comprimée.

3. Système de protection selon la revendication 1 ou 2, **caractérisé en ce que** l'extrémité du soufflet comporte un creux circulaire intérieur (54) prévu pour venir sur un bourrelet extérieur (28) lié à la tige de l'amortisseur (2).

4. Système de protection selon la revendication 3, **caractérisé en ce que** les découpes (52) sont formées sur la face supérieure du creux circulaire (54).

5. Système de protection selon la revendication 3 ou 4, **caractérisé en ce que** le soufflet (20) comporte à côté des découpes (52) un contour continu, de manière à enserrer de manière continue avec une étanchéité le bourrelet (28) de l'anneau supérieur (26) après le retrait de la sangle de compression (50).

6. Système de protection selon l'une quelconque des revendications précédentes, **caractérisé en ce que** le soufflet (20) est formé avec ses découpes (52) par le moulage d'un élastomère ou le soufflage d'une matière plastique.

7. Procédé d'assemblage d'un véhicule automobile présentant des amortisseurs équipés de systèmes de protection selon l'une quelconque des revendications précédentes, **caractérisé en ce qu'**on prépare un train roulant comportant les amortisseurs comprimés par des sangles de compression (50), on descend ensuite le système de protection sur ces amortisseurs en ajustant les sangles dans les découpes (52), et on dépose enfin la caisse du véhicule sur ce train roulant.

8. Procédé d'assemblage selon la revendication 7, **caractérisé en ce qu'**on retire les sangles de compression (50) après la dépose de la caisse du véhicule, en les faisant coulisser dans les découpes (52).

9. Véhicule automobile comprenant des amortisseurs hydrauliques de suspension équipés de systèmes de protection, **caractérisé en ce que** ces systèmes de protection sont réalisés selon l'une quelconque des revendications 1 à 6.

## Patentansprüche

1. Schutzsystem für hydraulischen Stoßdämpfer der ein Aufhängungselement (16) mit der Karosserie eines Kraftfahrzeugs verbindet, das einen Schaft (2) umfasst, der in einem Rohr (4) gleitet, wobei dieses Schutzsystem einen Balg (20) umfasst, der ein Ende (54) aufweist, das vorgesehen ist, um mit dem Schaft des Stoßdämpfers (2) verbunden zu sein, **dadurch gekennzeichnet, dass** dieses Balgende (54) Aussparungen (52) umfasst, die das Durchgehen eines Kompressionsgurts (50), der den Schaft (2) komprimiert hält, erlauben.

2. Schutzsystem nach Anspruch 1, **dadurch gekennzeichnet, dass** es zwei diametral gegenüberliegende (52) Aussparungen umfasst, die das Durchgehen des Kompressionsgurts (50) erlauben, der zwei Seiten umfasst, die entlang des Rohrs (4) angeordnet sind, und zwischen diesen Seiten einen zentralen Teil, der oberhalb des Endes des Schafts (2) durchgeht, um ihn komprimiert zu halten.

3. Schutzsystem nach Anspruch 1 oder 2, **dadurch gekennzeichnet, dass** das Ende des Balgs eine innere kreisförmige Vertiefung (54) umfasst, die vorgesehen ist, um auf den äußeren Wulst (28), der mit dem Schaft des Stoßdämpfers (2) verbunden ist, zu kommen.

4. Schutzsystem nach Anspruch 3, **dadurch gekennzeichnet, dass** die Aussparungen (52) auf der oberen Fläche der kreisförmigen Vertiefung (54) ausgebildet sind.

5. Schutzsystem nach Anspruch 3 oder 4, **dadurch gekennzeichnet, dass** der Balg (20) neben den Aussparungen (52) eine kontinuierliche Kontur derart umfasst, dass mit einer Abdichtung der Wulst (28) des oberen Rings (26) nach dem Entfernen des Kompressionsgurts (50) kontinuierlich eingespannt ist.

6. Schutzsystem nach einem der vorhergehenden Ansprüche, **dadurch gekennzeichnet, dass** der Balg (20) mit seinen Aussparungen (52) durch Formen eines Elastomers oder Blasen eines Kunststoffs gebildet wird.

7. Verfahren zum Zusammenbauen eines Kraftfahrzeugs, das Stoßdämpfer aufweist, die mit Schutzsystemen nach einem der vorhergehenden Ansprüche ausgestattet sind, **dadurch gekennzeichnet, dass** ein Fahrwerk vorbereitet wird, das Stoßdämpfer umfasst, die von Kompressionskolben (50) komprimiert sind, anschließend das Schutzsystem auf diese Stoßdämpfer gesenkt wird, indem die Gurte in den Aussparungen (52) eingestellt werden, und die Karosserie des Fahrzeugs schließlich auf diesem Fahrwerk abgelegt wird.

8. Verfahren zum Zusammenbauen nach Anspruch 7, **dadurch gekennzeichnet, dass** man die Kompressionsgurte (50) nach dem Ablegen der Karosserie des Fahrzeugs entfernt, indem man sie in den Aussparungen (52) gleiten lässt.

9. Kraftfahrzeug, das hydraulische Aufhängungsstoßdämpfer umfasst, die mit Schutzsystemen ausgestattet sind, **dadurch gekennzeichnet, dass** diese Schutzsysteme nach einem der Ansprüche 1 bis 6 hergestellt sind.

## Claims

1. A protection system for a hydraulic shock absorber connecting a suspension element (16) to the body shell of a motor vehicle, including a rod (2) sliding in a tube (4), this protection system comprising a gaiter (20) having one end (54) intended to be connected to the shock absorber rod (2), **characterized in that** this end (54) of the gaiter comprises cutouts (52) permitting the passage of a compression strap (50) that keeps the rod (2) compressed.

2. The protection system according to Claim 1, **characterized in that** it comprises two diametrically opposed cutouts (52), permitting the passage of the compression strap (50) including two sides disposed along the tube (4), and between these sides a central portion passing above the end of the rod (2) so as to keep it compressed.

3. The protection system according to Claim 1 or 2, **characterized in that** the end of the gaiter comprises an interior circular hollow (54), intended to come over an exterior bead (28) linked to the rod of the shock absorber (2).

4. The protection system according to Claim 3, **characterized in that** the cutouts (52) are formed on the upper face of the circular hollow (54).

5. The protection system according to Claim 3 or 4, **characterized in that** the gaiter (20) comprises at the side of the cutouts (52) a continuous contour, so as to enclose in a continuous manner with sealing the bead (28) of the upper ring (26) after the withdrawal of the compression strap (50).

6. The protection system according to any one of the preceding claims, **characterized in that** the gaiter (20) is formed with its cutouts (52) by the moulding of an elastomer or by the blowing of a plastic material.

7. An assembly method of a motor vehicle having shock absorbers equipped with protection systems according to any one of the preceding claims, **characterized in that** a running gear is prepared comprising the shock absorbers compressed by compression straps (50), the protection system is then descended over these shock absorbers, adjusting the straps in the cutouts (52), and finally the body shell of the vehicle is placed on this running gear.

8. The assembly method according to Claim 7, **characterized in that** the compression straps (50) are withdrawn after the body shell of the vehicle is put in place, by sliding them in the cutouts (52).

9. A motor vehicle including hydraulic suspension shock absorbers equipped with protection systems, **characterized in that** these protection systems are realized according to any one of Claims 1 to 6.
